# EUROPEAN PATENT SPECIFICATION

(11) **EP 4 138 170 B1**
(45) Date of publication and mention of the grant of the patent: **01.04.2026**
(21) Application number: 22785024.5
(22) Date of filing: 08.04.2022
(51) Int. Cl.: H01M 10/0585, H01M 10/0562, H01M 10/0565, H01M 10/0525

(54) **METHOD FOR PREPARING ALL-SOLID-STATE BATTERY AND ALL-SOLID-STATE PREPARED THEREBY**
VERFAHREN ZUR HERSTELLUNG EINER FESTKÖRPERBATTERIE UND DADURCH HERGESTELLTER FESTKÖRPER
PROCÉDÉ DE PRÉPARATION DE BATTERIE ENTIÈREMENT SOLIDE ET BATTERIE ENTIÈREMENT SOLIDE AINSI PRÉPARÉE

(30) Priority: 09.04.2021 KR 20210046816; 06.04.2022 KR 20220043008
(43) Date of publication of application: 22.02.2023
(73) Proprietor: LG Energy Solution, Ltd., Seoul 07335 (KR)
(72) Inventor: LEE, Jung Pil, Daejeon 34122 (KR); HAN, Hyea Eun, Daejeon 34122 (KR); HAH, Hoe Jin, Daejeon 34122 (KR); KIM, Dong Hyeon, Daejeon 34122 (KR)
(74) Representative: Goddar, Heinz J.
(86) International application number: PCT/KR2022/005133
(87) International publication number: WO 2022/216115

(56) References cited:
- JP-A- 2019 040 759
- KR-A- 20150 128 057
- KR-A- 20180 003 830
- KR-A- 20200 129 379
- KR-A- 20210 018 040
- US-A1- 2012 216 394

## Description

### [Technical Field]

The present invention relates to an all-solid-state battery manufacturing method and an all-solid-state battery manufactured thereby. More particularly, the present invention relates to an all-solid-state battery manufacturing method capable of inhibiting formation of lithium dendrites in an all-solid-state battery, whereby it is possible to increase the lifespan of the all-solid-state battery and to improve the safety of the all-solid-state battery, and an all-solid-state battery manufactured thereby.

### [Background Art]

A lithium secondary battery, which is rechargeable and has high energy density, has attracted attention as a new energy source that has environmentally friendly characteristics, since the lithium secondary battery not only remarkably reduces the use of fossil fuels but also does not generate by-products as the result of the use of energy.

A lithium secondary battery has also been spotlighted as an energy source for devices having high output and high energy density, such as electric vehicles, as well as wearable devices or portable devices. To this end, much research to increase the operating voltage and energy density of the lithium secondary battery has been conducted.

A lithium ion secondary battery including an electrolytic solution and a separator, which is a kind of lithium secondary battery, has shortcomings in that there are high dangers of fire outbreak and explosion. As a solution thereto, an all-solid-state battery, which uses a nonflammable solid as an electrolyte, has been proposed.

The all-solid-state battery has advantages in that safety is high and the movement speed of lithium ions is high, since a solid electrolyte is used, and the thickness of a negative electrode is reduced, whereby energy density is increased.

In particular, a negative electrode constituted by a current collector alone without inclusion of a negative electrode mixture has been proposed as a means configured to increase the energy density of the all-solid-state battery.

When an all-solid-state battery including a negative electrode current collector having no negative electrode mixture is charged, lithium ions move from a positive electrode to a negative electrode, and lithium is plated on the negative electrode current collector at the part at which the negative electrode current collector and a solid electrolyte layer contact each other. When the all-solid-state battery is discharged in this state, the lithium plated on the negative electrode current collector is stripped off and moves to the positive electrode.

As the all-solid-state battery is repeatedly charged and discharged, the size of the lithium plated on the negative electrode current collector may be gradually increased, and lithium dendrites may grow along an aperture of the solid electrolyte layer. The lithium dendrites may cause short circuit in the battery or may reduce the capacity of the battery.

When the contact area between the solid electrolyte layer and the negative electrode current collector is small, lithium is plated on only the small area, whereby there is a high possibility of occurrence of lithium dendrites. Consequently, there is a need for technology capable of increasing the contact area between the negative electrode current collector and the solid electrolyte layer.

In connection therewith, Patent Document 1 relates to a method of manufacturing an all-solid-state battery capable of obtaining high output and excellent cycle characteristics. Specifically, the method includes a first process of assembling an all-solid-state battery, a second process of heating the all-solid-state battery in an uncharged state, and a third process of cooling the all-solid-state battery in an uncharged state, wherein the all-solid-state battery is heated while being pressed in the second process.

A negative electrode of Patent Document 1 includes a carbonaceous material, such as graphite, as a negative electrode active material; however, technology capable of inhibiting formation of lithium dendrites when lithium plating and stripping occur on the surface of a negative electrode including no negative electrode active material is not disclosed.

Therefore, there is a need for technology capable of inhibiting formation of lithium dendrites in an all-solid-state battery including an anode having no anode mixture, i.e. an anode-free battery.

(Patent Document 1) Japanese Patent Application Publication No. 2019-40759 (2019.03.14)

US 2012/216 394 A1 relates to a method for producing a solid electrolyte battery in which an outer case houses at least one electrode cell that has an electrode unit comprising at least a positive electrode layer, a solid electrolyte layer and a negative electrode layer stacked in this order, the method including the steps of: inserting the electrode cell in the outer case before pressing the electrode cell in a stacking direction in the electrode unit, and pressing the electrode cell from the outside of the outer case in the stacking direction in the electrode unit.

JP 2019 040 759 A discloses a method for manufacturing an all-solid battery comprising a first step of assembling an all-solid battery including an electrode group having a positive electrode, a solid electrolyte layer and a negative electrode; a second step of heating the all-solid battery in the state of being uncharged at a temperature of 80 °C or higher; and a third step of cooling the all-solid battery in the state of being uncharged to a temperature of 45 °C or under after the second step. The solid electrolyte layer and at least one of the positive and negative electrodes each include a solid electrolyte. In the first step, a laminate in which the positive electrode, the solid electrolyte layer and the negative electrode are laminated is formed, and the laminate is pressurized. The temperature for heating the all-solid battery is lower than a temperature at which the phase transition, glass transition or chemical change of the solid electrolyte is caused.

### [Disclosure]

### [Technical Problem]

The present invention has been made in view of the above problems, and it is an object of the present invention to provide an all-solid-state battery manufacturing method capable of increasing the interfacial adhesion area between a solid electrolyte layer and a negative electrode, whereby it is possible to minimize formation of lithium dendrites in an all-solid-state battery, and therefore it is possible to increase the lifespan of the all-solid-state battery and to improve the safety of the all-solid-state battery, and an all-solid-state battery manufactured thereby.

### [Technical Solution]

An all-solid-state battery manufacturing method according to the present invention to accomplish the above object includes the steps of: (a) preparing an electrode assembly having a solid electrolyte layer disposed between a positive electrode and a negative electrode, (b) receiving the electrode assembly in a battery case to assemble an all-solid-state battery, (c) primarily pressing the all-solid-state battery, and (d) secondarily pressing the all-solid-state battery, wherein heating and pressing are simultaneously performed in the secondary pressing step, and wherein the negative electrode comprises no negative electrode mixture.

The temperature range in step (d) may be 60°C to 150°C.

Step (d) may be performed for 12 hours to 30 hours.

A pressing jig configured to press the all-solid-state battery may be a constant position jig having a paired structure including a first pressing jig and a second pressing jig, and step (d) may include: pressing and heating the all-solid-state battery in the state in which the first pressing jig and the second pressing jig are separated by a distance such that the all-solid-state battery is pressed; resetting the distance between the first pressing jig and the second pressing jig when the thickness of the all-solid-state battery is less than the initial thickness of the all-solid-state battery; and heating and pressing the all-solid-state battery after resetting the distance between the first pressing jig and the second pressing jig.

The contact area at the interface between the negative electrode and the solid electrolyte layer after step (d) may be greater than the contact area at the interface between the negative electrode and the solid electrolyte layer before step (d).

In step (c), pressing may be performed using a CIP method.

The present invention provides an all-solid-state battery manufactured by the all-solid-state battery manufacturing method and a battery module including the all-solid-state battery as a unit cell.

In addition, the present invention may provide various combinations of the above solving means.

### [Advantageous Effects]

As is apparent from the above description, an all-solid-state battery manufacturing method according to the present invention includes a step of pressing and heating an all-solid-state battery, whereby it is possible to remarkably improve interfacial contact between a solid electrolyte layer and a negative electrode.

In addition, it is possible to prevent formation of a lithium nucleus on a local region of the surface of a negative electrode even though the negative electrode includes no negative electrode mixture, and therefore it is possible to inhibit growth of the lithium nucleus into lithium dendrites.

In the present invention, therefore, it is possible to provide an all-solid-state battery manufacturing method capable of securing long-term lifespan characteristics of an all-solid-state battery and improving safety of the all-solid-state battery and an all-solid-state battery manufactured thereby.

### [Description of Drawings]

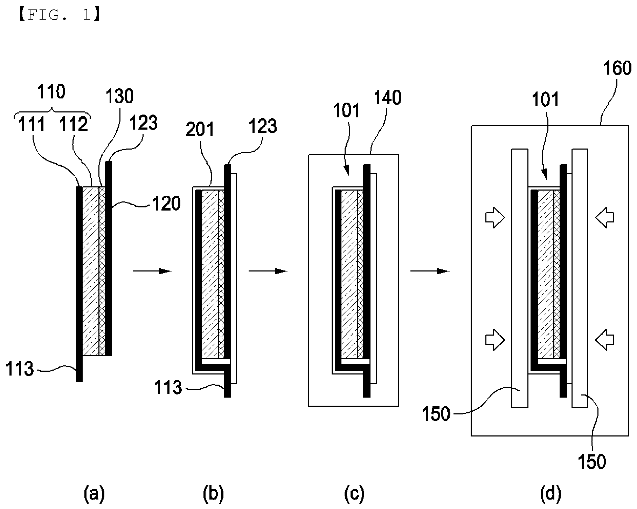

FIG. 1 is a schematic view of an all-solid-state battery manufacturing method according to the present invention.

### [Best Mode]

Now, preferred embodiments of the present invention will be described in detail with reference to the accompanying drawings such that the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part in the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Also, in the description of the invention and the claims, singular forms are intended to include plural forms unless mentioned otherwise.

Also, in the description of the invention and the claims, "or" includes "and" unless mentioned otherwise. Therefore, "including A or B" means three cases, namely, the case including A, the case including B, and the case including A and B.

Embodiments of the present invention will be described in detail with reference to the accompanying drawings.

Referring to FIG. 1, the present invention relates to a method of manufacturing an all-solid-state battery using an electrode assembly including a positive electrode including a positive electrode mixture, a negative electrode including no negative electrode mixture, and a solid electrolyte layer, and more particularly to an all-solid-state battery manufacturing method including (a) a step of preparing an electrode assembly having a solid electrolyte layer disposed between a positive electrode and a negative electrode, (b) a step of receiving the electrode assembly in a battery case to assemble an all-solid-state battery, (c) a step of primarily pressing the all-solid-state battery, and (d) a step of secondarily pressing the all-solid-state battery, wherein heating and pressing may be simultaneously performed in the secondary pressing step.

Generally, in an all-solid-state battery including a negative electrode having a negative electrode mixture formed therein, lithium is intercalated into the area at which a solid electrolyte layer and the negative electrode mixture contact each other and then moves into a negative electrode active material. For a negative electrode constituted by a negative electrode current collector alone without inclusion of a negative electrode mixture, if contact between the negative electrode current collector and a solid electrolyte layer is not uniform, lithium is plated on only some areas of the negative electrode current collector that contacts the solid electrolyte layer. When lithium grows on only a part of the negative electrode current collector, lithium dendrites may be formed.

In order to solve this problem, the present invention proposes an all-solid-state battery manufacturing method capable of increasing interfacial contact between a solid electrolyte layer and a negative electrode.

Specifically, an electrode assembly is prepared such that a solid electrolyte 130 is disposed between a positive electrode 110 and a negative electrode 120 as a semi-assembled state of an all-solid-state battery. For the positive electrode 110, a positive electrode current collector 111 is coated with a positive electrode mixture 112, and the negative electrode 120 is constituted by a negative electrode current collector alone.

For the positive electrode 110, positive electrode tabs configured to protrude downwards in the figure may be coupled to a positive electrode lead 113. For the negative electrode 120, negative electrode tabs configured to protrude upwards in the figure may be coupled to a negative electrode lead 123.

The electrode assembly is received in a battery case 201, and the battery case 201 is hermetically sealed, whereby an all-solid-state battery 101 may be assembled. The battery case 201 may be a pouch-shaped battery case formed by shaping a laminate sheet configured such that an outer resin layer is coupled to the outside of a metal layer and an inner resin layer is coupled to the inside of the metal layer.

In the state in which the battery case 201 is hermetically sealed, the positive electrode lead 113 and the negative electrode lead 123 may protrude outwards from the battery case 201 so as to function as electrode terminals.

(c) of FIG. 1 shows the state in which the all-solid-state battery 101 is placed in a chamber 140 in order to press the all-solid-state battery 101 using a cold isostatic pressing (CIP) method.

The CIP method, which is a cold isostatic pressing method, is a method of applying the same pressure to an object to be pressed in all directions in order to press the object. Since the CIP method is a pressing method based on infinite accumulation, the CIP method has advantages in that homogeneity is better than other pressing methods and a danger of an all-solid-state battery being damaged by pressing force is reduced.

The step of primarily pressing the all-solid-state battery may be performed using the CIP method. Optionally, heating may be simultaneously performed in the primary pressing step.

(d) of FIG. 1 shows the state in which the all-solid-state battery 101 primarily pressed in the chamber 140 is taken out of the chamber 140, is disposed between a pair of pressing jigs 150, and is disposed in an oven 160 having a temperature set to heat the all-solid-state battery.

The pressing jigs 150 may include a first pressing jig and a second pressing jig disposed at opposite sides of the all-solid-state battery. The pressing jigs 150 may be configured such that the temperature of the pressing jigs is adjustable, and therefore heating may be simultaneously performed when the all-solid-state battery 101 is pressed using the pressing jigs 150. Alternatively, the all-solid-state battery disposed between the pressing jigs may be disposed in an oven configured to be maintained at a predetermined temperature such that pressing and heating can be simultaneously performed.

When pressing and heating are simultaneously performed, as described above, total energy applied to the all-solid-state battery is increased by heat and pressure, and therefore contact between particles and contact between layers may be increased at the interface between the solid electrolyte layer and the negative electrode.

In addition, the present invention provides a method of stacking a positive electrode, a solid electrolyte layer, and a negative electrode to manufacture an electrode assembly and applying pressure to the interface between each electrode of the electrode assembly and the solid electrolyte layer in parallel thereto, wherein the solid electrolyte layer and the negative electrode may be easily deformed by heating, whereby interfacial contact between the solid electrolyte layer and the negative electrode may be improved.

The pressing jigs 150 may be constant pressure jigs configured to continuously apply a predetermined pressure or constant position jigs configured to set uniform distance therebetween.

When the pressing jigs are constant position jigs, the volume of the electrode assembly and the all-solid-state battery is reduced according to an initially set distance between the pressing jigs, and therefore force applied to the electrode assembly and the all-solid-state battery is reduced over time. As a result, it may be necessary to perform a process of resetting the position of the pressing jigs.

Specifically, the pressing jigs that press the all-solid-state battery are constant position jigs including a pair of pressing jigs, i.e. a first pressing jig and a second pressing jig, and a process of performing pressing and heating in the state in which the distance between the first pressing jig and the second pressing jig is set such that the all-solid-state battery is pressed and, when the thickness of the all-solid-state battery is less than an initial thickness thereof, resetting the distance between the first pressing jig and the second pressing jig and then performing heating and pressing may be included in step (d).

Alternatively, when the pressing jigs are constant pressure jigs, a predetermined pressing force may be applied to the all-solid-state battery for a predetermined time, and therefore no process of resetting the distance between the first pressing jig and the second pressing jig is necessary.

As described above, the all-solid-state battery manufacturing method according to the present invention includes a primary pressing process and a secondary pressing process, and the secondary pressing process includes a process of simultaneously performing heating and pressing, whereby it is possible to further improve interfacial contact between the solid electrolyte layer and the negative electrode. As a result, it is possible to provide an all-solid-state battery having low ionic resistance. In addition, formation of lithium dendrites is inhibited, whereby it is possible to provide an all-solid-state battery having improved lifespan characteristics.

In step (c), pressing and heating are simultaneously performed, and pressing force and temperature in step (c) may be equal to or different from pressing force and temperature in step (d).

That is, in step (c) and step (d), pressing force and temperature may be independently set.

Meanwhile, pressing and heating time in step (c) may be different from pressing and heating time in step (d).

For example, in consideration of the fact that structural elements of the all-solid-state battery may be damaged when high pressure and high temperature are quickly applied to the all-solid-state battery and the purpose of improving contact between the solid electrolyte layer and the negative electrode, the pressing and heating time in step (c) and step (d) may be 12 hours or more. Specifically, it is necessary to prevent an inefficient increase in manufacturing time of the all-solid-state battery, and therefore pressing and heating time may range from 12 hours to less than 30 hours on the premise that the pressing force and temperature are appropriately set in step (c) and step (d).

As a concrete example, the pressing force in step (c) and step (d) may be uniform. Alternatively, pressing may be performed with low pressure in the initial stage, and then pressing may be performed while the pressing force is increased stepwise, whereby it is possible to prevent damage to the structural elements of the all-solid-state battery. In addition, it is possible to improve contact between the solid electrolyte layer and the negative electrode.

Also, when the pressing force is increased stepwise in step (c) and step (d), as described above, heating temperature may be increased stepwise.

In a concrete example, step (c) may be performed through only a pressing process without a heating process. At this time, the pressing force and/or the pressing time in step (c) may be equal to or different from the pressing force and/or the pressing time in step (d).

In the present invention, the all-solid-state battery is pressed through primary pressing in step (c) and secondary pressing in step (d), and a heating process is also performed when the secondary pressing is performed, whereby the contact area at the interface between the negative electrode and the solid electrolyte layer after step (d) may be greater than the contact area at the interface between the negative electrode and the solid electrolyte layer before step (d). As a result, uniform contact may be achieved over the entire interface between the negative electrode and the solid electrolyte layer.

Consequently, it is possible to minimize growth of lithium dendrites between the negative electrode and the solid electrolyte layer.

The positive electrode is manufactured, for example, by applying a positive electrode mixture including a positive electrode active material to a positive electrode current collector and drying the positive electrode mixture. The positive electrode mixture may further optionally include a binder, a conductive agent, and a filler, as needed.

The positive electrode current collector is not particularly restricted as long as the positive electrode current collector exhibits high conductivity while the positive electrode current collector does not induce any chemical change in a battery to which the positive electrode current collector is applied. For example, the positive electrode current collector may be made of stainless steel, aluminum, nickel, titanium, or sintered carbon. Alternatively, the positive electrode current collector may be made of aluminum or stainless steel, the surface of which is treated with carbon, nickel, titanium, or silver. In addition, the positive electrode current collector may have a micro-scale uneven pattern formed on the surface thereof so as to increase the force of adhesion of the positive electrode active material. The positive electrode current collector may be configured in any of various forms, such as a film, a sheet, a foil, a net, a porous body, a foam body, and a non-woven fabric body.

The positive electrode active material is a material that is capable of inducing electrochemical reaction, and may include at least one of positive electrode active materials represented by Chemical Formulas 1 to 3 below.

LiₐCo₁₋ₓMₓO₂ (1)

LiₐMn_{2-y}M_{y}O₄ (2)

LiₐFe_{1-z}M_{z}PO₄ (3)

In the above formulas, 0.8≤a≤1.2, 0≤x≤0.8, 0≤y≤0.6, and 0≤z≤0.5, and
M is at least one selected from the group consisting of Ti, Cd, Cu, Cr, Mo, Mg, Al, Ni, Mn, Nb, V, and Zr.

That is, the positive electrode active material may include at least one material selected from the group consisting of a lithium metal oxide having a layered structure represented by Chemical Formula 1, a lithium-manganese-based oxide having a spinel structure represented by Chemical Formula 2, and a lithium-containing phosphate having an olivine structure represented by Chemical Formula 3.

Although the kind of the lithium metal oxide having the layered structure is not restricted, for example, at least one selected from the group consisting of lithium cobalt oxide, lithium nickel oxide, lithium manganese oxide, lithium cobalt-nickel oxide, lithium cobalt-manganese oxide, lithium manganese-nickel oxide, lithium nickel-manganese-cobalt oxide, and a material derived therefrom by substituting or doping with another element may be used.

The lithium nickel-manganese-cobalt oxide may be represented by Li_{1+z}Ni_{b}Mn_{c}Co_{1-(b+c+d)}M_{d}O₍₂₋ₑ₎Aₑ (where -0.5≤z≤0.5, 0.1≤b≤0.8, 0.1≤c≤0.8, 0≤d≤0.2, 0≤e≤0.2, b+c+d<1, M = Al, Mg, Cr, Ti, Si, or Y, and A = F, P, or Cl).

Although the kind of the lithium-manganese-based oxide having the spinel structure is also not restricted, for example, at least one selected from the group consisting of lithium manganese oxide, lithium nickel manganese oxide, and a material derived therefrom by substituting or doping with another element may be used.

In addition, although the kind of the lithium-containing phosphate having the olivine structure is also not restricted, for example, at least one selected from the group consisting of lithium iron phosphate and a material derived therefrom through substitution with another element may be used.

The other element may be at least one selected from the group consisting of Al, Mg, Mn, Ni, Co, Cr, V, and at least one Fe-based material selected from the group consisting of doped materials.

The binder is a component assisting in binding between the active material and the conductive agent and in binding with the current collector. The binder is generally added in an amount of 1 weight% to 30 weight% based on the total weight of the mixture including the positive electrode active material. For example, the binder may include at least one selected from the group consisting of polyvinylidene fluoride, polyvinyl alcohol, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer (EPDM) rubber, styrene butadiene rubber, fluoro rubber, and a copolymer thereof.

The conductive agent is generally added such that the conductive agent accounts for 1 weight% to 30 weight% based on the total weight of the mixture including the positive electrode active material. The conductive agent is not particularly restricted, as long as the conductive agent exhibits high conductivity without inducing any chemical change in a battery to which the conductive agent is applied. For example, graphite, such as natural graphite or artificial graphite; carbon black, such as ethylene black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; a conductive material, such as a polyphenylene derivative; graphene; or carbon nanotubes may be used as the conductive agent.

The filler is an optional component used to inhibit expansion of the electrode. There is no particular limit to the filler, as long as the filler is made of a fibrous material while the filler does not cause chemical changes in a battery to which the filler is applied. For example, a polyolefin-based polymer, such as polyethylene or polypropylene; or a fibrous material, such as glass fiber or carbon fiber, is used as the filler.

The negative electrode is constituted by a negative electrode current collector alone without inclusion of a negative electrode mixture.

The negative electrode current collector is generally manufactured so as to have a thickness of 3 µm to 500 µm. The negative electrode current collector is not particularly restricted, as long as the negative electrode current collector exhibits high conductivity while the negative electrode current collector does not induce any chemical change in a battery to which the negative electrode current collector is applied. For example, the negative electrode current collector may be made of copper, stainless steel, aluminum, nickel, titanium, or sintered carbon. Alternatively, the negative electrode current collector may be made of copper or stainless steel, the surface of which is treated with carbon, nickel, titanium, or silver, or an aluminum-cadmium alloy. In addition, the negative electrode current collector may have a micro-scale uneven pattern formed on the surface thereof so as to increase binding force of the negative electrode active material, in the same manner as the positive electrode current collector. The negative electrode current collector may be configured in any of various forms, such as a film, a sheet, a foil, a net, a porous body, a foam body, and a non-woven fabric body.

A solid electrolyte constituting the solid electrolyte layer may be any one selected from the group consisting of a sulfide-based solid electrolyte, an oxide-based solid electrolyte, and a polymer-based solid electrolyte.

The sulfide-based solid electrolyte may contain a sulfur atom (S), may exhibit ionic conductivity of metal belonging to Group 1 or 2 of the periodic table, and may exhibit electron insulation. It is preferable for the sulfide-based solid electrolyte to contain at least Li, S, and P as elements and to exhibit high lithium ion conductivity; however, elements other than Li, S, and P may be included depending on purposes or circumstances.

Specifically, Li₆PS₅Cl, Li₂S-P₂S₅, Li₂S-P₂S₅-LiCl, Li₂S-P₂S₅-H₂S, Li₂S-P₂S₅-H₂S-LiCl, Li₂S-LiI-P₂S₅, Li₂S-LiI-Li₂OP₂S₅, Li₂S-LiBr-P₂S₅, Li₂S-Li₂O-P₂S₅, Li₂S-Li₃PO₄-P₂S₅, Li₂S-P₂S₅-P₂O₅, Li₂S-P₂S₅-SiS₂, Li₂S-P₂S₅-SiS₂-LiCl, Li₂S-P₂S₅-SnS, Li₂S-P₂S₅-Al₂S₃, Li₂S-GeS₂, Li₂S-GeS₂-ZnS, Li₂S-Ga₂S₃, Li₂S-GeS₂-Ga₂S₃, Li₂S-GeS₂-P₂S₅, Li₂S-GeS₂-Sb₂S₅, Li₂S-GeS₂-Al₂S₃, Li₂S-SiS₂, Li₂S-Al₂S₃, Li₂S-SiS₂-Al₂S₃, Li₂S-SiS₂-P₂S₅, Li₂S-SiS₂-P₂S₅-LiI, Li₂S-SiS₂-LiI, Li₂S-SiS₂-Li₄SiO₄, Li₂S-SiS₂-Li₃PO₄, or Li₁₀GeP₂S₁₂ may be used as a sulfide-based inorganic solid electrolyte.

An amorphization method may be used as a method of synthesizing the sulfide-based inorganic solid electrolyte material. Examples of the amorphization method may include a mechanical milling method, a solution method, and a melting and rapid cooling method. Processing at a normal temperature (25°C) is possible, and therefore it is possible to simplify a manufacturing process.

It is preferable for the oxide-based solid electrolyte to be a compound that contains an oxygen atom (O), exhibits ionic conductivity of metal belonging to Group 1 or 2 of the periodic table, and exhibits electron insulation.

As the oxide-based solid electrolyte, for example, there may be used LiₓₐLa_{ya}TiO₃ (xa=0.3 to 0.7 and ya=0.3 to 0.7) (LLT), Li_{xb}La_{yb}Zr_{zb}M^{bb}_{mb}O_{nb} (where M^{bb} is at least one of Al, Mg, Ca, Sr, V, Nb, Ta, Ti, Ge, In, and Sn, xb satisfies 5≤xb≤10, yb satisfies 1≤yb≤4, zb satisfies 1≤zb≤4, mb satisfies 0≤mb≤2, and nb satisfies 5≤nb≤20), Li_{xc}B_{yc}M^{cc}_{zc}O_{nc} (where M^{cc} is at least one of C, S, Al, Si, Ga, Ge, In, and Sn, xc satisfies 0≤xc≤5, yc satisfies 0≤yc≤1, zc satisfies 0≤zc≤1, and nc satisfies 0≤nc≤6), Li_{xd}(Al, Ga)_{yd}(Ti, Ge) _{zd}Si_{ad}P_{md}O_{nd} (where 1≤xd≤3, 0≤yd≤1, 0≤zd≤2, 0≤ad≤1, 1≤md≤7, and 3≤nd≤13), Li₍₃₋₂ₓₑ₎M^{ee}ₓₑD^{ee}O (where xe indicates a number between 0 and 0.1, M^{ee} indicates a bivalent metal atom, and D^{ee} indicates a halogen atom or a combination of two or more kinds of halogen atoms), Li_{xf}Si_{yf}O_{zf} (1≤xf≤5, 0<yf≤3, and 1≤zf≤10), Li_{xg}S_{yg}O_{zg} (1≤xg≤3, 0<yg≤2, and 1≤zg≤10), Li₃BO₃-Li₂SO₄, Li₂O-B₂O₃-P₂O₅, Li₂O-SiO₂, Li₆BaLa₂Ta₂O₁₂, Li₃PO_{(4-3/2w)}N_{w} (w<1), Li_{3.5}Zn_{0.25}GeO₄ having a lithium super ionic conductor (LISICON) type crystalline structure, La_{0.55}Li_{0.35}TiO₃ having a perovskite type crystalline structure, LiTi₂P₃O₁₂ having a sodium super ionic conductor (NASICON) type crystalline structure, Li_{1+xh+yh}(Al, Ga)ₓₕ(Ti, Ge)₂₋ₓₕSi_{yh}P_{3-yh}O₁₂ (where 0≤xh≤1 and 0≤yh≤1), or Li₇La₃Zr₂O₁₂ (LLZ) having a garnet type crystalline structure. Alternatively, a phosphorus compound including Li, P, and O may also be used. For example, lithium phosphate (Li₃PO₄), LiPON in which a portion of oxygen in lithium phosphate is replaced by nitrogen, or LiPOD¹ (D¹ being at least one selected from among Ti, V, Cr, Mn, Fe, Co, Ni, Cu, Zr, Nb, Mo, Ru, Ag, Ta, W, Pt, and Au) may be used. Alternatively, LiA¹ON (A¹ being at least one selected from among Si, B, Ge, Al, C, and Ga) may also be used.

The polymer-based solid electrolyte may be a solid polymer electrolyte formed by adding a polymer resin to a lithium salt that is independently solvated or a polymer gel electrolyte formed by impregnating a polymer resin with an organic electrolytic solution containing an organic solvent and a lithium salt.

The solid polymer electrolyte is not particularly restricted as long as the solid polymer electrolyte is made of, for example, a polymer material that is ionically conductive and is generally used as a solid electrolyte material of the all-solid-state battery. Examples of the solid polymer electrolyte may include a polyether-based polymer, a polycarbonate-based polymer, an acrylate-based polymer, a polysiloxane-based polymer, a phosphazene-based polymer, polyethylene oxide, a polyethylene derivative, an alkylene oxide derivative, a phosphoric acid ester polymer, poly agitation lysine, polyester sulfide, polyvinyl alcohol, polyvinylidene fluoride, and a polymer containing an ionic dissociation group. Alternatively, the solid polymer electrolyte may include a branched copolymer formed by copolymerizing an amorphous polymer, such as polymethylmethacrylate (PMMA), polycarbonate, polysiloxane, and/or phosphazene, as a comonomer, in the main chain of polyethylene oxide (PEO), which is a polymer resin, a comb-like polymer resin, and a crosslinking polymer resin.

The polymer gel electrolyte includes an organic electrolytic solution including a lithium salt and a polymer resin, wherein the organic electrolytic solution is included in an amount of 60 to 400 parts by weight based on weight of the polymer resin. Although the polymer resin applied to the polymer gel electrolyte is not limited to specific components, for example, a polyvinylchloride (PVC)-based resin, a polymethylmethacrylate (PMMA)-based resin, polyacrylonitrile (PAN), polyvinylidene fluoride (PVDF), and polyvinylidene fluoride hexafluoropropylene (PVDF-HFP) may be included.

The solid electrolyte layer may include a binder in order to secure the force of binding in solid electrolyte particles. For example, the binder may include at least one selected from the group consisting of polytetrafluoroethylene, polyethylene oxide, polyethyleneglycol, polyacrylonitrile, polyvinylchloride, polymethylmethacrylate, polypropylene oxide, polyphosphazene, polysiloxane, polydimethylsiloxane, polyvinylidene fluoride, polyvinylidene fluoride-co-hexafluoropropylene (PVDF-HFP), polyvinylidene fluoride-co-chlorotrifluoroethylene (PVDF-CTFE), polyvinylidene fluoride-co-tetrafluoroethylene (PVDF-TFE), polyvinylidene carbonate, polyvinylpyrrolidone, styrene-butadiene rubber, nitrile-butadiene rubber, and hydrogenated nitrile butadiene rubber.

The present invention provides a battery module including the all-solid-state battery manufactured by the all-solid-state battery manufacturing method as a unit cell, and the battery module may be used as an energy source of a medium to large device that requires high-temperature stability, long cycle characteristics, and high capacity characteristics.

As examples of the medium to large device, there may be a power tool driven by a battery-powered motor, electric automobiles, including an electric vehicle (EV), a hybrid electric vehicle (HEV), and a plug-in hybrid electric vehicle (PHEV), electric two-wheeled vehicles, including an electric bicycle (E-bike) and an electric scooter (E-scooter), an electric golf cart, and an energy storage system. However, the present invention is not limited thereto.

Hereinafter, the present invention will be described with reference to the following examples. These examples are provided only for easier understanding of the present invention and should not be construed as limiting the scope of the present invention.

### <Experimental Example 1> Change in ionic resistance of solid electrolyte layer depending on pressure of pressing jigs

In order to manufacture a solid electrolyte layer, argyrodite (Li₆PS₅Cl), as a solid electrolyte, and polytetrafluoroethylene, as a binder, were dispersed in anisole in a weight ratio of 95:5, and were stirred to manufacture a solid electrolyte layer slurry.

The solid electrolyte layer slurry was applied to a polyethylene terephthalate release film by coating, and was dried in a vacuum state at 100°C for 12 hours to manufacture a solid electrolyte layer having a thickness of 50 µm.

The solid electrolyte layer was interposed between Ni foil sheets, was hermetically sealed with an aluminum pouch, and was fixed to pressing jigs.

Electrochemical impedance was measured using an analysis instrument (VMP3 from BioLogic Science Instruments Ltd.) under conditions of an amplitude of 10 mV and a scan range of 500 kHz to 0.1 MHz at 60°C.

The measured ionic resistances depending on pressure are shown in Table 1 below.

**[Table 1]**

| | | | | | |
|---|---|---|---|---|---|
| Pressing jig pressure (MPa) | 0 | 2.75 | 5.5 | 11 | 20 |
| Ionic resistance (ohm) | 4.2 | 4 | 3.8 | 3.7 | 3.7 |

Referring to Table 1 above, there is a tendency in which ionic resistance of the solid electrolyte layer is slightly reduced as jig pressure is applied; however, the measured ionic resistance is uniform when a pressure higher than 11 MPa is applied, and therefore no further improvement is achieved.

Consequently, it can be seen that, when only pressing force is applied, there is a limitation in improving the solid electrolyte layer and/or contact between the solid electrolyte layer and the Ni foil.

### <Experimental Example 2> Change in ionic resistance of solid electrolyte layer depending on temperature

Change in ionic resistance was measured using the same instrument as in Experimental Example 1 under the same conditions as in Experimental Example 1 while the solid electrolyte layer manufactured in Experimental Example 1 was thermally treated in the state in which the solid electrolyte layer was not disposed at the pressing jigs. The measured ionic resistances depending on temperature are shown in Table 2 below.

**[Table 2]**

| | | | | | |
|---|---|---|---|---|---|
| Heat treatment temperature (°C) | 25 | 60 | 100 | 150 | 180 |
| Ionic resistance (ohm) | 4.2 | 4.2 | 4.1 | 4.1 | 4.4 |

Referring to Table 2 above, when only heat treatment is performed in the state in which no pressure is applied to the solid electrolyte layer, ionic resistance is hardly reduced even though heat treatment temperature is increased, and therefore it seems that there is little improvement in contact between the solid electrolyte layer and the Ni foil at the interface therebetween. This is a consequent in consideration of the fact that heat treatment at a temperature of 300°C to 400°C is necessary in order for a sulfide-based solid electrolyte or an oxide-based solid electrolyte to obtain an effect, such as sintering.

Since the solid electrolyte layer according to the present invention contained a binder, however, the structure in the solid electrolyte layer was changed or thermal stability of the binder was lowered when heat treatment was performed for a long time at a high temperature of 180°C, and therefore ionic resistance was slightly increased.

### <Experimental Example 3> Change in ionic resistance of solid electrolyte layer depending on heat and pressure

Change in ionic resistance was measured using the same instrument as in Experimental Example 1 under the same conditions as in Experimental Example 1 while the solid electrolyte layer manufactured in Experimental Example 1 was thermally treated in the state in which the solid electrolyte layer was disposed at the pressing jigs. The measured ionic resistances are shown in Table 3 below.

In Table 3 below, the initial condition means the initial state in which no pressure was applied to the pressing jigs at a normal temperature (25°C).

**[Table 3]**

| Condition | Initial | 25°C for 2 day under 5.5 MPa | 40°C for 2 day under 5.5 MPa | 60°C for 2 day under 5.5 MPa | 100°C for 12 hr under 5.5 MPa | 100°C for 1 day under 5.5 MPa | 150°C for 12 hr under 5.5 MPa |
|---|---|---|---|---|---|---|---|
| Ionic resistance (ohm) | 4.2 | 3.8 | 3.5 | 2.8 | 3.0 | 2.7 | 2.7 |

Referring to Table 3 above, when the temperature is increased to 40°C from the initial state in which neither heat nor pressure is applied, ionic resistance is reduced by about 17%, and therefore the measured ionic resistance is about 83% of the initial ionic resistance. When the temperature is further increased and pressing is performed while heating is performed at 60°C or higher, it can be seen that ionic resistance of the solid electrolyte layer is remarkably reduced. This is a result that is difficult to expect in Experimental Example 1 and Experimental Example 2, and the measured ionic resistance is about 64% of the initial ionic resistance. When heating is performed at a temperature of 60°C or higher while pressing is performed, therefore, it is possible to obtain an effect of remarkably reducing ionic resistance.

### <Example 1>

In order to manufacture a positive electrode for all-solid-state batteries, LiNi_{0.8}Co_{0.1}Mn_{0.1}O₂, as a positive electrode active material, argyrodite (Li₆PS₅Cl), as a solid electrolyte, furnace black, as a conductive agent, and polytetrafluoroethylene, as a binder, were prepared in a weight ratio of 77.5:19.5:1.5:1.5, and were dispersed and stirred in anisole to manufacture a positive electrode slurry. The positive electrode slurry was applied to an aluminum current collector having a thickness of 14 µm by doctor blade coating, and was dried in a vacuum state at 100°C for 12 hours to manufacture a positive electrode.

In order to manufacture a solid electrolyte layer, argyrodite (Li₆PS₅Cl), as a solid electrolyte, and polytetrafluoroethylene, as a binder, were dispersed in anisole in a weight ratio of 95:5, and were stirred to manufacture a solid electrolyte layer slurry. The solid electrolyte layer slurry was applied to a polyethylene terephthalate release film by coating, and was dried in a vacuum state at 100°C for 12 hours to form a solid electrolyte layer.

In order to manufacture a negative electrode for all-solid-state batteries including a coating layer and an ion transport layer, Ag was sputtered so as to have a size of 30 nm on a nickel current collector having a thickness of 10 µm to form an Ag layer as a coating layer. Subsequently, the Ag layer was coated with a slurry of acetylene black and polyvinylidene fluoride mixed in a weight ratio of 97:3 to form an ion transport layer, and then drying was performed, whereby an electrode having a multilayered structure was manufactured.

The positive electrode, the solid electrolyte layer, and the negative electrode were sequentially stacked to manufacture an all-solid-state battery.

In order to primarily press the all-solid-state battery, pressure was applied using a CIP method at 25°C. At this time, the applied pressure was 500 MPa.

In order to secondarily press the all-solid-state battery, the all-solid-state battery was thermally treated in an oven at 100°C for one day in the state in which the all-solid-state battery was disposed at pressing jigs and pressed at 5.5 MPa

### <Example 2>

An all-solid-state battery was manufactured using the same method as in Example 1 except that the all-solid-state battery was thermally treated in the oven at 150°C for 12 hours in the state in which the all-solid-state battery was disposed at the pressing jigs, unlike Example 1.

### <Comparative Example 1>

An all-solid-state battery was manufactured using the same method as in Example 1 except that only the primary pressing step was performed and the secondary pressing step was not performed, unlike Example 1.

### <Comparative Example 2>

An all-solid-state battery was manufactured using the same method as in Example 1 except that the all-solid-state battery was disposed at the pressing jigs and pressed at 11 MPa in the secondary pressing step and heat treatment was not performed, unlike Example 1.

### <Comparative Example 3>

An all-solid-state battery was manufactured using the same method as in Example 1 except that the all-solid-state battery was disposed at the pressing jigs and pressed at 11 MPa for two days in the secondary pressing step and heat treatment was not performed, unlike Example 1.

### <Comparative Example 4>

An all-solid-state battery was manufactured using the same method as in Example 1 except that only heat treatment was performed in the secondary pressing step in the state in which the all-solid-state battery was not disposed at the pressing jigs, unlike Example 1.

### <Comparative Example 5>

An all-solid-state battery was manufactured using the same method as in Example 1 except that, in the secondary pressing step, the all-solid-state battery was thermally treated in the oven at 100°C for two days in the state in which the all-solid-state battery was not disposed at the pressing jigs, unlike Example 1.

### <Comparative Example 6>

An all-solid-state battery was manufactured using the same method as in Example 1 in the state in which the all-solid-state battery was disposed at the pressing jigs and pressed at 5.5 MPa except that, in the secondary pressing step, the all-solid-state battery was thermally treated in the oven at 100°C for three hours, unlike Example 1.

### <Comparative Example 7>

An all-solid-state battery was manufactured using the same method as in Example 1 except that, in the secondary pressing step, the all-solid-state battery was thermally treated in the oven at 100°C for five hours in the state in which the all-solid-state battery was disposed at the pressing jigs and pressed at 11 MPa, unlike Example 1.

### <Comparative Example 8>

An all-solid-state battery was manufactured using the same method as in Example 1 except that, in the secondary pressing step, the all-solid-state battery was thermally treated in the oven at 100°C for 10 hours in the state in which the all-solid-state battery was disposed at the pressing jigs and pressed at 11 MPa, unlike Example 1.

### <Comparative Example 9>

An all-solid-state battery was manufactured using the same method as in Example 1 except that the all-solid-state battery was not pressed and thus no pressing force was applied to the electrode assembly and that the positive electrode, the solid electrolyte layer, and the negative electrode were roll-pressed and then the electrode assembly was manufactured, unlike Example 1.

### <Experimental Example 4> Evaluation of all-solid-state batteries

Initial charge capacities and initial discharge capacities of the all-solid-state batteries manufactured according to Example 1, Example 2, and Comparative Example 1 to Comparative Example 4 were measured while the all-solid-state batteries were charged to 4.25 V at 0.05 C in a constant current-constant voltage mode at 60°C and discharged to 3.0 V at 0.05 C. The results are shown in Table 4 below.

In addition, lifespan evaluation was performed at 0.1 C within a range of 3.7 V to 4.2 V. Table 4 below shows the number of cycles at which short circuit occurred during charging and discharging of the all-solid-state batteries and capacity retention rates at that time.

**[Table 4]**

| | Charge capacity (mAh) | Discharge capacity (mAh) | Efficiency (%) | Capacity retention rate (%@cycle) |
|---|---|---|---|---|
| Example 1 | 23.2 | 20.8 | 89.7 | 89.2@80 |
| Example 2 | 23.9 | 21.7 | 90.8 | 87.8@80 |
| Comparative Example 1 | 23.4 | 20.3 | 86.8 | 72.5@20 |
| Comparative Example 2 | 24.2 | 21.2 | 87.6 | 81.0@20 |
| Comparative Example 3 | 24 | 21.1 | 87.9 | 80.2@20 |
| Comparative Example 4 | 23.5 | 20.2 | 86.0 | 74.3@20 |
| Comparative Example 5 | 23.8 | 20.3 | 85.3 | 75.2@20 |
| Comparative Example 6 | 23.8 | 21.0 | 88.2 | 36.6@60 |
| Comparative Example 7 | 24.1 | 21.2 | 88.0 | 63.2@40 |
| Comparative Example 8 | 24.3 | 21.6 | 88.9 | 76.5@40 |
| Comparative Example 9 | Short circuit | - | - | - |

Referring to Table 4 above, initial efficiencies of the all-solid-state batteries according to Example 1 and Example 2, in which heat and pressure were simultaneously applied in the secondary pressing step, are higher than initial efficiencies of the all-solid-state batteries according to Comparative Example 2 and Comparative Example 3, in which only pressure was applied, and initial efficiencies of the all-solid-state batteries according to Comparative Example 4 and Comparative Example 5, in which only heating was performed

For Comparative Example 9, in which the electrode assembly was not pressed in the state in which the electrode assembly was formed but the electrodes and the solid electrolyte layer, which were half-finished products, were pressed, the interface between each electrode and the solid electrolyte layer was not smoothly formed, whereby the battery was not normally operated.

In particular, for an all-solid-state battery that includes no negative electrode mixture and is operated based on a lithium (Li) plating and stripping mechanism during charging and discharging, capacity reduction and short circuit occur due to lithium dendrites as charge cycles are performed. It can be seen that, when ionic resistance of the all-solid-state battery is reduced by heat and pressure, as in Example 1 and Example 2, lifespan characteristics are remarkably improved.

If heating and pressing time is less than 12 hours, i.e. short, even though heating and pressing are simultaneously performed, as in Comparative Example 6 to Comparative Example 8, however, an effect of reducing ionic resistance is not significant, and therefore a lifespan improvement effect is greatly low. Particularly, it can be seen that, if the heating and pressing time is shorter than in Example 1 and Example 2 even though the pressing force is higher than in Example 1 and Example 2, as in Comparative Example 7 and Comparative Example 8, the capacity retention rate and cycle characteristics are inferior.

Consequently, it can be seen that, when heating and pressing are simultaneously performed for 12 hours or longer in the secondary pressing step, as in the all-solid-state battery manufacturing method according to the present invention, contact area at the interface between the negative electrode and the solid electrolyte layer is increased, whereby ionic resistance of the battery is reduced, and therefore the capacity retention rate and lifespan characteristics are improved.

### (Description of Reference Numerals)

101: All-solid-state battery
110: Positive electrode
111: Positive electrode current collector
112: Positive electrode mixture
113: Positive electrode lead
120: Negative electrode
123: Negative electrode lead
130: Solid electrolyte layer
140: Chamber
150: Pressing jigs
160: Oven
201: Battery case

## Claims

1. An all-solid-state battery (101) manufacturing method, the method comprising the steps of:
(a) preparing an electrode assembly having a solid electrolyte layer (130) disposed between a positive electrode (110) and a negative electrode (120);
(b) receiving the electrode assembly in a battery case (201) to assemble an all-solid-state battery (101);
(c) primarily pressing the all-solid-state battery (101; and
(d) secondarily pressing the all-solid-state battery (101),
wherein heating and pressing are simultaneously performed in the secondary pressing step, and
wherein the negative electrode comprises no negative electrode mixture.

2. The all-solid-state battery (101) manufacturing method according to claim 1, wherein a temperature range in step (d) is 60°C to 150°C.

3. The all-solid-state battery (101) manufacturing method according to claim 1, wherein step (d) is performed for 12 hours to 30 hours.

4. The all-solid-state battery (101) manufacturing method according to claim 1, wherein a pressing jig (150) configured to press the all-solid-state battery (101) is a constant position jig having a paired structure comprising a first pressing jig and a second pressing jig, and
wherein step (d) comprises:
pressing and heating the all-solid-state battery in a state in which the first pressing jig and the second pressing jig are separated by a distance such that the all-solid-state battery is pressed;
resetting the distance between the first pressing jig and the second pressing jig when a thickness of the all-solid-state battery is less than an initial thickness of the all-solid-state battery; and
heating and pressing the all-solid-state battery after resetting the distance between the first pressing jig and the second pressing jig.

5. The all-solid-state battery manufacturing method according to claim 1, wherein a contact area at an interface between the negative electrode and the solid electrolyte layer after step (d) is greater than the contact area at the interface between the negative electrode and the solid electrolyte layer before step (d).

6. The all-solid-state battery manufacturing method according to claim 1, wherein step (c) is a process of applying pressure using a CIP method.

## Patentansprüche

1. Herstellungsverfahren für eine Festkörperbatterie (101), wobei das Verfahren die folgenden Schritte umfasst:
(a) Herstellen einer Elektrodenanordnung mit einer Festelektrolytschicht (130), die zwischen einer positiven Elektrode (110) und einer negativen Elektrode (120) angeordnet ist;
(b) Aufnehmen der Elektrodenanordnung in einem Batteriegehäuse (201), um eine Festkörperbatterie (101) zusammenzubauen;
(c) primäres Pressen der Festkörperbatterie (101); und
(d) sekundäres Pressen der Festkörperbatterie (101),
wobei Erwärmen und das Pressen gleichzeitig in dem sekundären Pressschritt durchgeführt werden, und
wobei die negative Elektrode keine negative Elektrodenmischung umfasst.

2. Herstellungsverfahren für eine Festkörperbatterie (101) nach Anspruch 1, bei dem ein Temperaturbereich in Schritt (d) 60 °C bis 150 °C beträgt.

3. Herstellungsverfahren für eine Festkörperbatterie (101) nach Anspruch 1, bei dem Schritt (d) für 12 Stunden bis 30 Stunden durchgeführt wird.

4. Herstellungsverfahren für eine Festkörperbatterie (101) nach Anspruch 1, bei dem eine Pressvorrichtung (150), die konfiguriert ist, um die Festkörperbatterie (101) zu pressen, eine Konstantpositionsvorrichtung mit einer gepaarten Struktur ist, die eine erste Pressvorrichtung und eine zweite Pressvorrichtung umfasst, und
bei dem Schritt (d) umfasst:
Pressen und Erwärmen der Festkörperbatterie in einem Zustand, in dem die erste Pressvorrichtung und die zweite Pressvorrichtung durch einen Abstand getrennt sind, so dass die Festkörperbatterie gepresst wird;
Zurücksetzen des Abstands zwischen der ersten Pressvorrichtung und der zweiten Pressvorrichtung, wenn eine Dicke der Festkörperbatterie kleiner als eine Anfangsdicke der Festkörperbatterie ist; und
Erwärmen und Pressen der Festkörperbatterie nach dem Zurücksetzen des Abstands zwischen der ersten Pressvorrichtung und der zweiten Pressvorrichtung.

5. Herstellungsverfahren für eine Festkörperbatterie nach Anspruch 1, bei dem eine Kontaktfläche an einer Grenzfläche zwischen der negativen Elektrode und der Festelektrolytschicht nach Schritt (d) größer als die Kontaktfläche an der Grenzfläche zwischen der negativen Elektrode und der Festelektrolytschicht vor Schritt (d) ist.

6. Herstellungsverfahren für eine Festkörperbatterie nach Anspruch 1, bei dem Schritt (c) ein Prozess des Aufbringens von Druck unter Verwendung eines CIP-Verfahrens ist.

## Revendications

1. Procédé de fabrication d'une batterie tout-solide (101), le procédé comprenant les étapes consistant à :
(a) préparer un ensemble électrode ayant une couche d'électrolyte solide (130) disposée entre une électrode positive (110) et une électrode négative (120) ;
(b) recevoir l'ensemble électrode dans un boîtier de batterie (201) pour assembler une batterie tout-solide (101) ;
(c) premièrement, presser la batterie tout-solide (101 ; et
(d) deuxièmement, presser la batterie tout-solide (101),
dans lequel le chauffage et le pressage sont effectués simultanément à la deuxième étape de pressage, et
dans lequel l'électrode négative ne comprend pas de mélange d'électrode négative.

2. Procédé de fabrication d'une batterie tout-solide (101) selon la revendication 1, dans lequel une plage de température à l'étape (d) est 60°C à 150°C.

3. Procédé de fabrication d'une batterie tout-solide (101) selon la revendication 1, dans lequel l'étape (d) est effectuée pendant 12 heures à 30 heures.

4. Procédé de fabrication d'une batterie tout-solide (101) selon la revendication 1, dans lequel un gabarit de pressage (150) configuré pour presser la batterie tout-solide (101) est un gabarit à position constante ayant une structure paire comprenant un premier gabarit de pressage et un deuxième gabarit de pressage, et
dans lequel l'étape (d) consiste à :
presser et chauffer la batterie tout-solide dans un état où le premier gabarit de pressage et le deuxième gabarit de pressage sont séparés d'une distance telle que la batterie tout-solide est pressée ;
réinitialiser la distance entre le premier gabarit de pressage et le deuxième gabarit de pressage quand une épaisseur de la batterie tout-solide est inférieure à une épaisseur initiale de la batterie tout-solide ; et
chauffer et presser la batterie tout-solide après la réinitialisation de la distance entre le premier gabarit de pressage et le deuxième gabarit de pressage.

5. Procédé de fabrication d'une batterie tout-solide (101) selon la revendication 1, dans lequel une aire de contact à une interface entre l'électrode négative et la couche d'électrolyte solide après l'étape (d) est supérieure à l'aire de contact à l'interface entre l'électrode négative et la couche d'électrolyte solide avant l'étape (d).

6. Procédé de fabrication d'une batterie tout-solide (101) selon la revendication 1, dans lequel l'étape (c) est un processus d'application d'une pression en utilisant un procédé CIP.
